# EUROPÄISCHE PATENTANMELDUNG

(11) **EP 2 078 624 A2**
(43) Veröffentlichungstag der Anmeldung: **15.07.2009**
(21) Anmeldenummer: 08105807.5
(22) Anmeldetag: 17.11.2008
(51) Int. Cl.: B60C 23/04

(54) **Reifendruckkontrollvorrichtung mit Beschleunigungserfassung durch den Reifendrucksensor**

(30) Priorität: 10.01.2008 DE 102008003845
(71) Anmelder: Robert Bosch GmbH, 70442 Stuttgart (DE)
(72) Erfinder: Pannek, Thorsten, 70176, Stuttgart (DE); Muenzel, Horst, Palo Alto, 94304 (US)

(57) **Zusammenfassung**

Die Erfindung betrifft eine Reifendruckkontrollvorrichtung zum Überwachen des Luftdrucks in einem Reifen eines Landfahrzeuges, mit einem Reifendrucksensor der zum Erfassen und Versenden von Daten ausgelegt ist, mit einer Steuervorrichtung die zum Verarbeiten der vom Reifendrucksensor bereitgestellten Daten in Ausgabewerte ausgebildet ist, wobei der Reifendrucksensor zum Erfassen des Luftdrucks in dem Reifen ausgebildet ist, wobei die Steuervorrichtung zum Verarbeiten von allgemeinen, also statischen und dynamischen Reifen- und Fahrzeugdaten, wie ESP-Daten und Motormanagementdaten, sowie zum Verarbeiten von Wirkzusammenhängen, die optimierende Auswirkungen auf den Rollwiderstand und das Fahrverhalten haben, ausgebildet ist.

## Beschreibung

### Stand der Technik

Die Erfindung betrifft eine Reifendruckkontrollvorrichtung zum Überwachen des Luftdrucks in einem Reifen eines Fahrzeuges, mit einem Reifendrucksensor, der zum Erfassen und Versenden von Daten ausgelegt ist, mit einer Steuervorrichtung, die zum Verarbeiten der vom Reifendrucksensor bereitgestellten Daten in Ausgabewerte ausgebildet ist, wobei der Reifendrucksensor zum Erfassen des Luftdrucks in den Reifen ausgebildet ist.

Aus dem Stand der Technik, etwa der DE 10321235 A1 ist das automatische Aufpumpen von Reifen, basierend auf unterschiedlichen Fahrzeugbeladungszuständen bekannt. Dabei übernimmt ein Reifendrucksteuersystem für ein Fahrzeug unter Hinzunahme eines Kompressors die Befüllung der Reifen mit Luft. Das Reifendrucksteuersystem umfasst dabei einen Reifendrucksensor und einen separaten Lastsensor, die auf eine Steuervorrichtung zugreifen. Die Steuervorrichtung, die elektronisch mit dem Reifendrucksensor und dem Lastsensor gekoppelt ist, steuert den Kompressor derart an, dass der Reifendruck auf für die jeweilige Last optimale Werte eingestellt ist.

In dieser Druckschrift sind durch den Begriff "Fahrzeug" landgebundene Kraftfahrzeuge, insbesondere solche mit einem Verbrennungsmotor, umfasst.

Der Kraftstoffverbrauch und damit auch der CO₂-Ausstoß eines Fahrzeuges, insbesondere eines Kraftfahrzeuges, wie eines Pkws, eines Geländewagens oder eines Lkws, wird u. a. durch den Rollwiderstand der Reifen dieses Fahrzeuges beeinflusst. Der Rollwiderstand wird durch die Gestaltung des Reifens, also dessen Design und der Auswahl der hierfür verwendeten Materialien, beeinflusst. Allerdings ist der Fülldruck bei der Ermittlung des Rollwiderstandes, also der Luftdruck im Reifeninneren, besonders relevant. Durch Erhöhung des Reifendrucks, also Anheben des Fülldruckes, lässt sich in Abhängigkeit des Fahrzeuges, seiner Bereifung und weiteren Faktoren, der Treibstoffverbrauch um ein bis fünf Prozent reduzieren. Dabei ist es auch von Bedeutung, welche Art von Treibstoff, also z. B. Diesel oder Benzin, als Kraftstoff verwendet wird.

Wie aus der DE 10321235 A1 schon bekannt, ist es möglich den Fülldruck des Reifens zu verändern, und somit entscheidend Einfluss auf die Eigenschaften des Reifens, insbesondere den Rollwiderstand, zu nehmen.

So erhöht sich bei großer Beladung des Fahrzeuges, oder niedrigem Fülldruck im Reifen die Reifenaufstandsfläche, wodurch der Rollwiderstand steigt. Dies kann dann durch einen höheren Fülldruck ausgeglichen werden. Es ist auch möglich, den Druck über einen empfohlenen Fülldruck hinaus anzuheben und so Kraftstoff einzusparen.

Ein höherer Fülldruck kann jedoch auch Nachteile hervorrufen, nämlich eine Zunahme an Verschleiß und/oder eine Abnahme der Bodenhaftung, was zu einem schlechteren Fahrverhalten, bis hin zum Ausbrechen des Fahrzeugs in Kurven, also zu Unfällen, führen kann.

Die DE 10321235 A1 lehrt den Reifendruck in Abhängigkeit der Temperatur und der Ladungsbedingungen zu steuern. Die Berücksichtigung des Grips, also der Griffigkeit des Reifens auf der Straßenoberfläche, wird dabei ebenfalls berücksichtigt.

Die Deutsche Offenlegungsschrift DE 10321235 A1 setzt die dort offenbarte Reifendrucksteuervorrichtung zur Überwachung einer Druckabfallrate ein. Eine Steuervorrichtung gibt dabei den Druck so ein, bis eine Schwellenleckrate erhalten wird und ein Kompressor mit dem Leck nicht mehr mithalten kann. Erst dann informiert die Steuervorrichtung den Fahrzeugführer mittels einer Anzeige, dass er eine Handlung nachfolgen lassen muss, nämlich den Ersatz des Reifens.

Die aus dem Stand der Technik bekannten Vorrichtungen und Verfahren sind allerdings zu aufwändig und zu kostenintensiv. Ferner ist keine Treibstoffverbrauchsminimierung wirkungsvoll realisiert.

### Offenbarung der Erfindung

Die Erfindung stellt Mittel zur Verfügung, die wirkungsvoll den Kraftstoffverbrauch vermindern und die Fahreigenschaften eines Fahrzeuges optimieren.

### Vorteile der Erfindung

Eine Verbesserung einer Reifendruckkontrollvorrichtung ist erfindungsgemäß dadurch erreicht, dass die Steuervorrichtung zum Verarbeiten von allgemeinen, also statischen und/oder dynamischen Reifen- und Fahrzeugdaten, wie ESP-Daten und/oder Motormanagementdaten, sowie zum Verarbeiten von Wirkzusammenhängen, die optimierende Auswirkungen auf den Rollwiderstand und das Fahrverhalten haben, ausgebildet ist. Durch eine entsprechende Ausgestaltung einer Reifendruckkontrollvorrichtung, wie in Anspruch 1 beansprucht, wird es möglich, auf zusätzliche Aggregate, wie zusätzliche Drucksensoren luftunterstützter Luftfedersysteme oder andere zusätzliche Sensoren, zu verzichten. Mit Hilfe eines Beschleuingungssensors, der Teil des Reifendrucksensors ist, können weitere Messdaten, insbesondere dynamische Reifendaten, wie Beladungszustand, Profiltiefe und Reibwert festgestellt werden.

Es lässt sich hierdurch besonders wirkungsvoll ein lernendes System erreichen. Bei Nutzung dieser Wirkzusammenhänge, z. B. der Abhängigkeit des Grip von Fülldruck, dem Zusammenhang von Beladungszustand und Rollwiderstand, dem Zusammenhang zwischen Rollwiderstand und Kraftstoffverbrauch, sowie Rollwiderstand und Reifendruck, zwischen Reifendruck und Verschleiß, zwischen Geschwindigkeit und optimalem Reifendruck, etc., kann bei entsprechender Variation des Fülldruckes das Fahrverhalten optimiert und der Kraftstoffverbrauch minimiert werden.

Ein solcher Algorithmus kann z.B. den allgemeingültigen Zusammenhang zwischen Rollwiderstand und Radlast beinhalten: RR = RRC • Radlast; wobei RR den Rollwiderstand (Rolling Resistance) und RRC den Rollwiderstandskoeffizienten (Rolling Resistance Coefficient) wiedergibt.

Ein voll beladener PKW hat somit einen um ca 20% höheren Rollwiderstand, bei entsprechend schlechten Rahmenbedingungen. Studien belegen, dass eine Änderung des Rollwiderstands von 10% zu einer Veränderung von 1 - 2% des Kraftstoffverbrauchs führt.

Die Wirkzusammenhänge können entweder in Form von in Kennfeldern dargestellten Verknüpfungen vorliegen, oder in Form von Algorithmen vorliegen und dabei abgestimmt sein auf einen Reifen, oder eine Reifenklasse. Eine Reifenklasse umfasst dabei unterschiedliche Reifen mit ähnlichen physikalischen Parametern.

Besonders vorteilhaft ist, wenn die entsprechenden Kennfelder im Reifendrucksensor, also im Reifen abgelegt sind und/oder in der Steuervorrichtung. Dabei bietet sich an, die spezifischen Daten für einen Reifen im Reifendrucksensor abzulegen und die spezifischen Daten für eine weitere Klasse in der Steuervorrichtung abzulegen.

Vorteilhafte Ausführungsformen der Erfindung werden in den Unteransprüchen beansprucht und nachfolgend näher beschrieben.

So ist es in einem Ausführungsbeispiel von Vorteil, wenn der Reifendrucksensor zum Erfassen der Temperatur der im Inneren des Reifens befindlichen Luft ausgebildet ist und/oder zum Erfassen der Profiltiefe des Reifens, des Reibwerts des Reifens und der Beladung des Fahrzeugs ausgebildet ist. Da der Reifendruck, und damit auch der Rollwiderstand eine Funktion der Temperatur ist, ist es zum Beispiel von Vorteil, wenn dieser Parameter mit berücksichtigt wird. Je höher die Temperatur im Reifen, also auch je höher der Umgebungsdruck ist, desto mehr dehnt sich die Luft im Inneren des Reifens aus, was zu einer Druckerhöhung führt. Dauerhaft hohe Temperaturen sind auch ein Indikator für einen hohen Verschleiß des Reifens.

Wenn der Reifendrucksensor eine Verarbeitungseinrichtung, wie einen Mikrocontroller aufweist, der zum Verarbeiten der vom Reifendrucksensor erfassten Daten ausgebildet ist, so ist es in dieser vorteilhaften Ausführungsform möglich, unterschiedliche Daten, die vom Reifendrucksensor erfasst werden, vorzuverarbeiten, um möglichst schnell die Daten an die entsprechenden weiterführenden Aggregate zuzuleiten, Steuerungsmaßnahmen auszulösen und dem Fahrzeugführer notwendige Handlungsanweisungen zu geben.

Um aufwändige Montagearbeiten, die insbesondere kostenintensiv sind, zu vermeiden, ist es von Vorteil, wenn der Reifendrucksensor eine Übermittlungseinrichtung, wie eine drahtlos Daten an die Steuervorrichtung übertragende Funkeinheit umfasst.

Wenn der Reifendrucksensor zum Verfügungstellen von dynamischen Daten, wie Beschleunigung, Druck und Temperatur, sowie statischen Daten, wie Maximaldruck und Maximalgeschwindigkeit für den jeweiligen Reifen ausgebildet ist, so lassen sich Handlungsanweisungen präziser ermitteln.

Veränderungen der Last, die auf den Reifen wirkt, lassen sich in einer weiteren vorteilhaften Ausführungsform dann besonders kostengünstig und schnell ermitteln, wenn der Reifendrucksensor zum Vorverarbeiten der Beschleunigungsdaten und der Druckdaten in Lastdaten oder in Daten, die einer Last äquivalent sind, wie z.B. das Verhältnis von Reifenaufstandsfläche und Umfang des Reifens, sowie zur Übermittlung an die Steuervorrichtung ausgebildet ist.

Um eine besonders einfache Montage und die angepasste Ausgabe von Handlungsanweisungen in Abhängigkeit des jeweiligen Reifens zu erreichen, ist es von Vorteil, wenn in einer weiteren vorteilhaften Ausführungsform der Reifendrucksensor direkt am Reifen, vorzugsweise an einer Innenwandung des Reifens befestigt ist. Anders als die Befestigung eines Reifendrucksensors an der Innenseite der Felge, oder dem Ventil, ist bei Wechsel der Bereifung dann automatisch die angepasste Datenzurverfügungsstellung an die Steuervorrichtung gewährleistet. Dadurch lassen sich Fehlinformationen an den Fahrzeugführer vermeiden. Dynamische Reifendaten wie Last oder Profiltiefe lassen sich auch nur am Reifen erfassen.

Wenn die Daten, die einem spezifischen Reifen zugeordnet sind, im Reifendrucksensor abgelegt sind und Daten, die eine Klasse von Reifen charakterisieren in der Steuervorrichtung (4) abgelegt sind, wird die Vertauschbarkeit von Daten ausgeschlossen, was zu einer besseren Integrität der Daten führt. Beim Clustern der Daten in Klassen wird nachfolgend der Verarbeitungsaufwand reduziert.

Wenn die Steuervorrichtung zum Verarbeiten von Wirkzusammenhängen, wie Beladung zu Rollwiderstand, Rollwiderstand zu Reifendruck, Rollwiderstand zu Kraftstoffverbrauch, Reifenaufstandfläche zu Grip, Reifendruck zu Verschleiß, Geschwindigkeit zu Reifendruck ausgebildet ist und/oder zum Verarbeiten der Anzahl an Eingriffen von ESP- Komponenten oder Traktionskontrollkomponenten ausgebildet ist, um das Fahrverhalten eines Fahrzeugführers zu klassifizieren, so lassen sich besonders präzise Handlungsanweisungen einleiten und lässt sich das Fahrverhalten Feinjustieren.

Ist zumindest einer der Ausgabewerte an eine Anzeigevorrichtung zum Übermitteln an einen Fahrzeugführer weitergeleitet, so ist in einem solch vorteilhaften Ausführungsbeispiel, der Fahrzeugführer schnell über die zu ergreifenden Maßnahmen oder automatisch ergriffenen Maßnahmen informiert, um ein optimales Verbrauchs- und/oder Fahrverhalten hervorzurufen.

Um dem Fahrzeugführer wertvolle Handlungsanweisungen zukommen zu lassen, und ihn zum Verändern des Reifendrucks zu bewegen, ist es von Vorteil, wenn eine Anzeigevorrichtung zum Anzeigen von Einsparungen im Treibstoffverbrauch und/oder zum Anzeigen einer Vergrößerung der Reichweite bei Veränderung des Reifendrucks in einer weiteren Ausführungsform vorhanden ist.

Die Erfindung betrifft auch ein Verfahren zum Anzeigen von Handlungsanweisungen an einen Fahrzeugführer zum Verändern des Reifendrucks mit einer Reifendruckkontrolleinrichtung, wobei die Steuervorrichtung selbstständig Abbruch- und/oder Auslösekriterien zum Anzeigen der Handlungsanweisung ermittelt. Die Verwendung eines solchen Verfahrens führt zu einem selbstlernenden System, das sich auf die jeweiligen Besonderheiten im Fahrverhalten eines Fahrzeugführers einstellt und dabei dessen Kraftstoffverbrauch minimiert und/oder den Fahrkomfort, die Fahrdynamik und das Fahrverhalten verbessert. Durch das selbstständige Ermitteln von Abbruch- und/oder Auslösekriterien wird eine permanente Dauerbelastung durch Realisierung einer Zeitsteuerung und Vorhalten von Grenzwerten verhindert.

### Kurze Beschreibung der Zeichnungen

Die Erfindung ist mittels einer Zeichnung näher erläutert. Dabei zeigt:
- Figur 1: eine schematische Darstellung einer Reifendruckkontrollvorrichtung und
- Figur 2: eine schematische Darstellung der einzelnen Eingangs- und Ausgangsgrößen in die erfindungsgemäße Reifendruckkontrollvorrichtung.

### Ausführungsformen der Erfindung

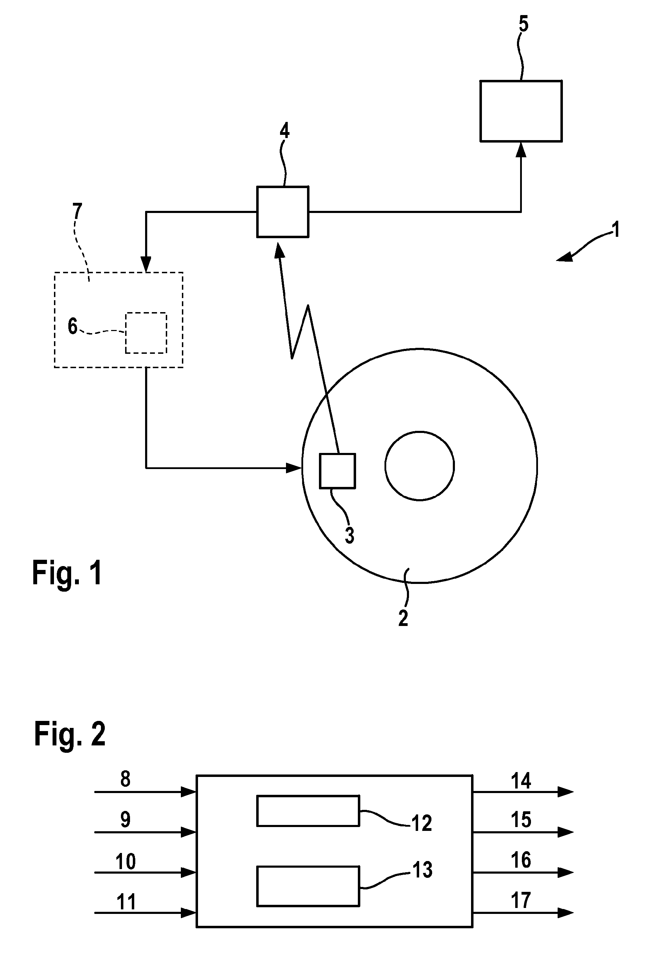

In Figur 1 ist eine Reifendruckkontrollvorrichtung 1 gemäß der Erfindung dargestellt. Dabei ist in einem Reifen 2 ein Reifendrucksensor 3 angeordnet. Ein solcher Reifendrucksensor 3 misst den Druck des Reifens 2, sowie die Beladung und ggf. auch die Geschwindigkeit des Fahrzeugs, in dem der Reifen angebracht ist. Auf dem Reifendrucksensor 3 sind alle notwendigen Reifendaten, wie empfohlener Druck, Reifentyp, Reifengröße, maximale Beladung, maximale Geschwindigkeit, µ-Schlupf-Kurve, Rollradius, Reifensteifigkeiten, Traktionsleistung usw., sowie für den Reifen charakteristische Kennfelder hinterlegt.

In diesen charakteristischen Kennfeldern sind Wirkzusammenhänge näher beschrieben.

Der Reifendrucksensor 3 ermittelt dynamische Daten, nämlich Beschleunigung, Geschwindigkeit, Radlast, Druck, Reifenprofiltiefe, Reibwert und Temperatur im Reifeninneren. Auch erfasst der Reifendrucksensor 3 statische Reifendaten wie Maximaldruck, der dem Reifen zugeführt werden kann, maximale Geschwindigkeit, die der Reifen erträgt und ähnliche Daten. Der Beschleunigungssensor innerhalb des Reifendrucksensors ist in entsprechenden Ausführungsbeispielen vorzugsweise mehrachsig und/oder mehrkanalig ausgebildet.

Der Reifendrucksensor 3 weist einen Mikrocontroller auf, der in der Lage ist, aus den Beschleunigungswerten, unter zeitabhängiger Berücksichtigung der Beschleunigungspeaks, also starken Veränderungen im Beschleunigungsverhalten, auf die Aufstandsfläche zu schließen, und somit die auf den Reifen wirkende Last ermitteln.

Die Wirkzusammenhänge können auch anders als in Kennfeldern mittels eines Algorithmus vorliegen, wodurch der optimale Arbeitspunkt für den Reifendruck bzgl. des Kraftstoffverbrauches ermittelbar ist, und zwar individuell für jeden bestimmten Reifen, jedes bestimmte Fahrzeug, sowie jede bestimmte Fahrsituation, z. B. eine Hochgeschwindigkeitsfahrt oder wenn das Fahrzeug voll beladen ist.

Die Wirkzusammenhänge sind theoretisch oder experimentell festlegbar.

Die ermittelten Rohdaten werden bei dem in Figur 1 dargestellten Ausführungsbeispiel vorverarbeitet, wobei die Daten dann drahtlos an eine zentrale Steuervorrichtung 4 weitergeleitet werden. Eine Auswertung der Daten erfolgt entweder schon vorab im Reifendrucksensor 3 oder, falls dies nicht möglich ist und/oder weitere spezifische Daten mit einzubeziehen sind, in der Steuervorrichtung 4. Die Steuervorrichtung 4 verarbeitet die empfangenen Daten weiter und übermittelt anzuzeigende Ausgabewerte an eine Anzeigevorrichtung 5. Auf der Anzeigevorrichtung 5 werden dem Fahrzeugführer dann Daten übermittelt, wie z. B. "Luftdruck ist zu niedrig; bitte Luftdruck im Reifen erhöhen, da dann 0,2 Liter pro 100 Kilometer weniger Kraftstoff verbraucht wird".

Auch ist es möglich, dass die Steuervorrichtung 5 lediglich neben dem Ist-Druck den vorgeschlagenen Soll-Druck anzeigt und ggf. eine Schätzung angibt, wie viel Kraftstoff/Treibstoff durch eine Veränderung des Fülldrucks im Reifeninneren eingespart wird.

In einer besonderen Ausführungsform, wie sie in Figur 1 strichliert angedeutet ist, umfasst die Reifendruckkontrollvorrichtung 1 auch eine Druckregeleinrichtung 7, mit einem Kompressor 6, der im Sinne eines Automatic Tire Pressure Regulators der den Luftruck im Reifen regelt. Dadurch wird der Reifendruck ohne dass der Fahrzeugführer eingreifen muss, automatisch geändert und an entsprechende Sollwerte angepasst. Diese Sollwerte werden von der Steuervorrichtung 4 zur Verfügung gestellt.

Das erfindungsgemäße Verfahren und die erfindungsgemäße Reifendruckkontrollvorrichtung ist auch zur Optimierung der Fahreigenschaft verwendbar. In Premium-Fahrzeugen stehen dabei unter Umständen nicht nur der vermindernde Kraftstoffverbrauch im Vordergrund, sondern gerade auch der Fahrkomfort und/oder das Fahrvergnügen. Hierzu wird der optimale Fülldruck für verschiedene Fahrsituationen errechnet, an der Anzeigevorrichtung 5 angezeigt und/oder mittels der Druckregeleinheit 7 und dem Kompressor 6 eingestellt. Zum sportlichen Fahren wird dann der Fülldruck minimiert, um den Grip zu erhöhen. Bei höherer Bedeutung von Kraftstoffersparnis, wird der Reifendruck als zu erhöhen angezeigt oder angehoben. Sportliches Fahren kann z.B. durch die Anzahl der Eingriffe von ABS, ESP und ASR ermittelt werden.

Durch die erfindungsgemäße Reifendruckkontrollvorrichtung und das entsprechende Verfahren zum Anzeigen von Handlungsanweisungen wird auch der Verschleiß des Reifens deutlich minimiert.

Die Wirksamkeit der Maßnahmen wird durch die die dynamische Messung der Reifenprofiltiefe, des Reibwerts und dem Verbrauch, sowie Hinzuziehung von ESP-Daten überprüft. Wird eine zu starke Abnahme des Reibwerts oder ein zu hoher Verschleiß detektiert, steuert das System mittels der Steuervorrichtung entsprechend auf einen Solldruckwert gegen. Diese Überprüfung mit einer Feed-back-Schleife ist optional.

Unterschiedliche Arten der Anzeige des Handlungsbedarfs bieten sich an. So bieten sich akustische und optische Vorrichtungen an. Bei der Wahl von akustischen Vorrichtungen kann entweder auf eine Sprachausgabe zurückgegriffen werden oder die Nutzung von Tonsignalen angewandt werden. Dabei lassen sich die Töne nach Lautstärke und Frequenz variieren.

Bei visuellen Anzeigevorrichtungen ist deren Integration in ein GPS-Anzeigegerät oder ein sogenanntes Head-Up-Display realisierbar.

Die erfindungsgemäße Reifendruckkontrollvorrichtung ist dabei in ein elektronisches Überwachungssystem eingebunden. Eventuelle zusätzliche Signale von weiteren Sensoren lassen sich dadurch integrieren und berücksichtigen.

Durch eine erfindungsgemäße Reifendruckkontrollvorrichtung lassen sich somit, ohne den Fahrzeugführer abzulenken, umweltfreundlichere Rahmenbedingungen realisieren, ein besseres Fahrverhalten, angepasst an das individuelle Empfinden eines Fahrzeugführers, umsetzen noch dazu bei nur geringen Kosten.

Die Austauschbarkeit der Reifendruckkontrollvorrichtung, sowie die Austauschbarkeit der einzelnen Komponenten ist sehr hoch und ermöglicht auch den Einsatz an unterschiedlichen Fahrzeugen unterschiedlicher OEMs. Die Attraktivität des Verbauens solcher Reifendruckkontrollvorrichtungen ist daher für die Erstausstatter von Fahrzeugen (OEM) interessant.

Besondere Umstellkosten, die von der Abkehr einer bestehenden Reifendruckkontrollvorrichtung zu einer erfindungsgemäßen Reifendruckkontrollvorrichtung herrühren, werden ferner sehr niedrig gehalten. Auch das Nachrüsten solcher Reifendruckkontrollvorrichtungen ist ohne großen Aufwand möglich.

Die Reifendruckkontrollvorrichtung agiert in unterschiedlichen Szenarien auf unterschiedliche Weise:

In einem ersten Szenario führt ein "Normalfahrer" einen durchschnittlichen PKW mit 1,5t Leergewicht und 250kg Zuladung. Das Fahrzeug wird meist mit nur einem oder zwei Insassen betrieben. Der Fahrzeugführer ist kein sportlicher Fahrer. Die Reifendruckkontrollvorrichtung schlägt dann einen Luftdruck vor, der knapp über dem vom Reifenhersteller empfohlenen Wert liegt, beispielsweise 0,2 bar darüber. Der Rollwiderstand wird beim Einstellen des entsprechenden Druckes um ca. 10% abgesenkt, was zu einer Kraftstoffverbrauchsverminderung von ca. 1 bis 2% führt, ohne dass der Verschleiß negativ beeinflusst wird. Auch das Fahrverhalten und insbesondere das Handling des Fahrzeugs wird nicht negativ beeinflusst.

Die notwendigen Daten werden aus den Reifen- und Fahrzeugdaten abgeleitet und werden außerdem durch Reibwerte-, Reifenprofiltiefenmessungen und ESP- Daten überwacht.

Entsprechende Rückkoppelungen werden vom die Beschleunigung ermittelnden Reifdrucksensorabschnitt zur Verfügung gestellt, um Rückschlüsse auf den Verschleiß ziehen zu können und entsprechende Gegenregelschritte einzuleiten. Auch wird optional der Grip überprüft und die ESP- Daten zur Überwachung herangezogen, um bei Verschlechterung der Bodenhaftung entsprechend regulierend einzugreifen.

In einem zweiten Szenario, etwa für eine Fahrgemeinschaft charakterisierend, liegt ein durchschnittlicher PKW von ca 1,5t Leergewicht und ca 250kg Beladung vor. Das Fahrzeug wird meist im voll beladenen Zustand betrieben. Die Reifendruckkontrollvorrichtung schlägt dann einen Reifendruck vor, der der dem des voll beladenen Zustands entspricht. Gegenüber dem empfohlenen Reifendruck lässt sich so ein um 20% verminderter Rollwiderstand und ein um 2 bis 4% verminderter Kraftstoffverbrauch erreichen.

Einem dritten Szenario liegt ein sportlicher Fahrer in einem leichten Fahrzeug, wie einem Roadster oder Sportwagen zugrunde. Hier muss die Reifendruckkontrollvorrichtung die sportliche Fahrweise berücksichtigen. Eine Erhöhung des Luftdrucks im Reifen ist nicht möglich, sofern die Fahrdynamik durch den dann abnehmenden Grip nicht negativ beeinflusst werden soll. Bei sehr leichten Fahrzeugen ist dies unter Umständen schon bei 0,2 bar der Fall. Andererseits ist der Grip durch eine entsprechende Druckverminderung verbesserbar. Die Reifendruckkontrollvorrichtung leitet also Schritte zum Absenken des Reifendrucks ein und zwar soweit, dass weder eine Reifenbeschädigung erfolgt, noch ein erhöhter Kraftstoffverbrauch resultiert.

Die Steuervorrichtung stellt Informationen zum Beschreiben des CO₂-Ausstoßes zur Verfügung. Diese werden vorteilhafterweise über die Anzeigevorrichtung dem Fahrzeugführer zur Anzeige gebracht.

In der Figur 2 sind die Eingangsgrößen, nämlich die statischen Reifendaten 8, wie Größe und maximal zulässige Last, etc; die dynamischen Reifendaten 9, wie Druck und Radlast, etc; die statischen Fahrzeugdaten 10, wie Leergewicht des Fahrzeugs etc; sowie die dynamischen Fahrzeugdaten 11, wie Anzahl der ESP- Eingriffe angegeben.

Diese Daten werden unter Hinzunahme von in Kennfeldern 12 oder Algorithmen 13 hinterlegten Wirkzusammenhängen zu Ausgangswerten verrechnet. Die Kennfelder umfassen Wirkzusammenhänge wie Reifendruck zu Rollwiderstand, etc.

Als Algorithmus bietet sich der Zusammenhang RR = RRC • Rollwiderstand an.

Als Ausgangsgrößen sind der optimale Reifendruck 14 als Regelgröße; die dem Fahrzeugführer angezeigte Spritersparnis 15; die erwartete Fahrdynamik 16, die unter Umständen die Regelgröße für Fahrdynamiksysteme darstellt und die CO₂- Ersparnis 17 angegeben.

## Patentansprüche

1. Reifendruckkontrollvorrichtung (1) zum Überwachen des Luftdrucks in einem Reifen (2) eines Fahrzeuges, mit einem Reifendrucksensor (3) der zum Erfassen und Versenden von Daten ausgelegt ist, mit einer Steuervorrichtung (4) die zum Verarbeiten der vom Reifendrucksensor (3) bereitgestellten Daten in Ausgabewerte ausgebildet ist, wobei der Reifendrucksensor (3) zum Erfassen des Luftdrucks in dem Reifen (2) ausgebildet ist, **dadurch gekennzeichnet, dass** die Steuervorrichtung (4) zum Verarbeiten von allgemeinen, also statischen und/oder dynamischen Reifen- und Fahrzeugdaten, wie ESP-Daten und/oder Motormanagementdaten, sowie zum Verarbeiten von Wirkzusammenhängen, die optimierende Auswirkungen auf den Rollwiderstand und das Fahrverhalten haben, ausgebildet ist.

2. Reifendruckkontrollvorrichtung (1) nach Anspruch 1, wobei der Reifendrucksensor (3) zum Erfassen der Temperatur der im Inneren des Reifens (2) befindlichen Luft ausgebildet ist und/oder zum Erfassen der Profiltiefe des Reifens (2), des Reibwerts des Reifens (2) und der Beladung des Fahrzeugs ausgebildet ist.

3. Reifendruckkontrollvorrichtung (1) nach Anspruch 1 oder 2, wobei der Reifendrucksensor (3) eine Verarbeitungseinrichtung, wie einen Mikrocontroller aufweist, der zum Verarbeiten der vom Reifendrucksensor (3) erfassten Daten ausgebildet ist.

4. Reifendruckkontrollvorrichtung (1) nach einem der Ansprüche 1 bis 3, wobei der Reifendrucksensor (3) eine Übermittlungseinrichtung, die eine drahtlos Daten an die Steuervorrichtung (4) übertragende Funkeinheit, umfasst.

5. Reifendruckkontrollvorrichtung (1) nach einem der Ansprüche 1 bis 4, wobei der Reifendrucksensor (3) zum Verfügungstellen von dynamischen Daten, wie Beschleunigung, Druck und Temperatur, sowie statischen Daten, wie Maximaldruck und Maximalgeschwindigkeit für den Reifen ausgebildet ist.

6. Reifendruckkontrollvorrichtung (1) nach einem der Ansprüche 1 bis 5, wobei der Reifendrucksensor (3) zum Vorverarbeiten der Beschleunigungsdaten und der Druckdaten in Lastdaten oder in Daten, die einer Last äquivalent sind, wie z.B. das Verhältnis von Reifenaufstandsfläche und Umfang des Reifens (2), sowie zur Übermittlung an die Steuervorrichtung (4) ausgebildet ist.

7. Reifendruckkontrollvorrichtung (1) nach einem der Ansprüche 1 bis 6, wobei der Reifendrucksensor (3) direkt am Reifen (2), vorzugsweise an einer Innenwandung des Reifens (2) befestigt ist.

8. Reifendruckkontrollvorrichtung (1) nach einem der Ansprüche 1 bis 7, wobei die Daten, die einem spezifischen Reifen (2) zugeordnet sind, im Reifendrucksensor (3) abgelegt sind und Daten, die eine Klasse von Reifen charakterisieren in der Steuervorrichtung (4) abgelegt sind.

9. Reifendruckkontrollvorrichtung (1) nach einem der Ansprüche 1 bis 8, wobei die Steuervorrichtung (4) zum Verarbeiten von Wirkzusammenhängen, wie Beladung zu Rollwiderstand, Rollwiderstand zu Reifendruck, Rollwiderstand zu Kraftstoffverbrauch, Reifenaufstandfläche zu Grip, Reifendruck zu Verschleiß, Geschwindigkeit zu Reifendruck ausgebildet ist und/oder zum Verarbeiten der Anzahl an Eingriffen von ESP- Komponenten oder Traktionskontrollkomponenten ausgebildet ist, um das Fahrverhalten eines Fahrzeugführers zu klassifizieren.

10. Reifendruckkontrollvorrichtung (1) nach einem der Ansprüche 1 bis 9, wobei zumindest einer der Ausgabewerte an eine Anzeigevorrichtung zum Übermitteln an einen Fahrzeugführer weitergeleitet ist.

11. Reifendruckkontrollvorrichtung (1) nach Anspruch 10, umfassend die Anzeigevorrichtung (5) zum Anzeigen von Einsparungen im Treibstoffverbrauch und/oder zum Anzeigen einer Vergrößerung der Reibwerte bei Veränderung des Reifendrucks.

12. Verfahren zum Anzeigen von Handlungsanweisungen an einen Fahrzeugführer zum Verändern des Reifendrucks mit einer Reifendruckkontrolleinrichtung (1) nach einem der Ansprüche 1 bis 9, wobei die Steuervorrichtung (4) selbstständig Abbruch- und/oder Auslösekriterien zum Anzeigen der Handlungsanweisungen ermittelt.
